# EUROPÄISCHE PATENTSCHRIFT

(11) **EP 1 759 121 B1**
(45) Veröffentlichungstag und Bekanntmachung des Hinweises auf die Patenterteilung: **25.08.2010**
(21) Anmeldenummer: 04804247.7
(22) Anmeldetag: 23.12.2004
(51) Int. Cl.: F16B 2/24, F16B 5/06

(54) **FEDERKLAMMER**
SPRING CLIP
BRIDE DE RESSORT

(30) Priorität: 24.06.2004 DE 102004030622
(43) Veröffentlichungstag der Anmeldung: 07.03.2007
(73) Patentinhaber: ElringKlinger AG, 72581 Dettingen/Erms (DE)
(72) Erfinder: BERESKA, Erwin, 91459 Markt Erlbach (DE)
(74) Vertreter: Bartels & Partner
(86) Internationale Anmeldenummer: PCT/EP2004/014653
(87) Internationale Veröffentlichungsnummer: WO 2006/000251

(56) Entgegenhaltungen:
- GB-A- 885 372
- US-A- 3 276 800
- US-A1- 2003 167 604

## Beschreibung

Die Erfindung bezieht sich auf eine Federklammer, insbesondere aus Federstahl, mit drei einstückig miteinander verbundenen Klemmschenkeln, von denen zur Bildung eines S-förmigen Profiles zwei äußere Schenkel über einen inneren Schenkel gefaltet sind, so dass zwei an diesen angrenzende, zu entgegengesetzten Seiten offene Klemmkanäle gebildet werden, gemäß der Merkmalsausgestaltung des Oberbegriffes des Patentanspruches 1.

Federklammern dieser Art, die auch als S-Clipse bezeichnet werden, sind handelsüblich. Solche Klammern werden auf verschiedenen technischen Bereichen, vornehmlich im Kraftfahrzeugbau, benutzt, um flache oder plattenartige Bauteile an ihren sich überlappenden Rändern zu verbinden.

Dadurch, dass bei einer Art von bekannten Federklammern der innere Schenkel der S-Form zur Klemmung beider zu klemmender Bauteile verwendet wird, ergibt sich für beide Klemmkanäle die gleiche Einsetztiefe für das Einschieben der jeweiligen Bauteile in die Klemmkanäle. Dies ist in vielen Anwendungsfällen zweckentsprechend oder sogar günstig. Probleme ergeben sich jedoch, wenn Anbauteile an einem Trägerteil so befestigt werden müssen, dass sich gewünschte oder erforderliche Abstände zwischen den verbundenen Bauteilen ergeben. Mit den bekannten S-Clipsen ist eine definierte Abstandhaltung schwierig zu erreichen, weil der innere Schenkel der S-Form, da er zur Klemmung beider Bauteile Verwendung findet, nicht verkürzt werden kann, was zur Folge hat, dass sich für beide Bauteile die jeweils gleiche Einschiebtiefe in den Klemmkanälen ergibt.

Demgemäß ist für eine Federklammer nach der US 3 276 800 A bereits vorgeschlagen worden, eine U-förmig gebogene Klammer mit zwei einstükkig miteinander verbundenen Klemmschenkeln vorzusehen, wobei der derart gebildete einzige Klemmkanal eine Anschlageinrichtung aufweist, die die Tiefe des Klemmkanals derart begrenzt, dass ein in diesem Klemmkanal zu sicherndes Bauteil im Abstand vom inneren Ende des Klemmkanals gehalten ist, wobei die bekannte Anschlageinrichtung einen einzelnen, mittig im Klemmschenkel ausgeschnittenen und ins Innere des Klemmkanals hinein abgebogenen Teil aufweist. Ferner weist die bekannte Lösung am selben Klemmschenkel, der den Anschlag bildet, an dessen freiem Ende aus der Fläche des Klemmschenkels ausgeklinkte Klemmnasen auf, die im Klemmkanal jeweils eine gegen den Grund desselben schräg vorspringende federnde Kralle zur Verkrallung mit dem im Klemmkanal aufzunehmenden Bauteil bilden. Damit die beiden Klemmschenkel überhaupt klemmend an dem zu sichernden Bauteil festlegbar sind, ist zwischen dem inneren Ende des Klemmkanals und dem Anschlag der Anschlageinrichtung eine Durchgriffsschraube vorgesehen, die mit ihrem freien Schraubenende in einem zugeordneten Gewinde des anschlagfreien Klemmschenkels festlegbar ist. Was die Einsatzmöglichkeiten mit der bekannten Federklammer sowie eine Sicherung gegen ungewollte relative Kippbewegungen gegenüber dem eingesetzten Bauteil anbelangt, läßt die bekannte Lösung noch Wünsche offen.

Durch die GB 885 372 A ist eine gattungsgemäße Federklammer, insbesondere aus Federstahl, bekannt mit drei einstückig miteinander verbundenen Klemmschenkeln, von denen zur Bildung eines S-förmigen Profils zwei äußere Schenkel über einen inneren Schenkel gefaltet sind, so dass zwei an diesen angrenzende, zu entgegengesetzten Seiten offene Klemmkanäle gebildet werden, wobei der eine der beiden äußeren Klemmschenkel aus der Fläche des Klemmschenkels ausgeklinkte Klemmnasen aufweist, die im Klemmkanal jeweils eine gegen den Grund desselben schräg vorspringende federnde Kralle zur Verkrallung mit einem im Klemmkanal aufzunehmenden Bauteil bilden. Obwohl bei der bekannten Lösung am inneren Schenkel eine mittige Auswölbung vorgesehen ist in Form einer vorspringenden Nase oder in Form eines vorspringenden kanalförmigen Querabschnittes, die jeweils in Richtung der endseitig ausgeklinkten Klemmnasen des benachbarten äußeren Klemmschenkels vorstehen, ist insoweit nur eine Verringerung des offenen Querschnittes des Klemmkanals geschaffen, um eine erhöhte Klemmkraft auf das aufzunehmende Bauteil auszuüben; jedoch stößt das jeweils aufzunehmende Bauteil am Inneren des Klemmkanals an, an deren Stelle der genannte äußere Klemmschenkel in den inneren Klemmschenkel übergeht. Dergestalt ist eine definierte Positionierung oder Abstandhaltung von mittels der bekannten Federklammer festzulegenden Bauteilen relativ zueinander nicht möglich.

Ausgehend von diesem Stand der Technik liegt der Erfindung die Aufgabe zugrunde, eine Federklammer zu schaffen, die eine definierte Positionierung oder Abstandhaltung der betreffenden Bauteile relativ zueinander ermöglicht, wobei gleichzeitig das jeweils eingesetzte Bauteil gegen relative Kippbewegungen zur Federklammer gesichert ist.

Eine dahingehende Aufgabe löst eine Federklammer mit den Merkmalen des Patentanspruches 1 in seiner Gesamtheit.

Dadurch, dass erfindungsgemäß einer der Klemmkanäle eine Anschlageinrichtung aufweist, die die Tiefe des Klemmkanals so begrenzt, dass das in diesem Klemmkanal zu sichernde Bauteil im Abstand vom inneren Ende des Klemmkanals gehalten ist, dass der andere der beiden äußeren Schenkel unter Bildung der Anschlageinrichtung an beiden Seitenrändern je einen ins Innere des Klemmkanals hinein abgebogenen Teil aufweist, so dass zu beiden Seiten des Klemmkanals je ein Anschlag gebildet ist, und dass die jeweilige Klemmnase in demjenigen Klemmkanal vorgesehen ist, der zu dem die Anschlageinrichtung aufweisenden Klemmkanal entgegengesetzt ist, sind sowohl die Federklammer als auch das eingesetzte Bauteil in gleicher Weise gegen relative Kippbewegungen gesichert, wie dies auch bei Federklammern ohne Anschlageinrichtung der Fall ist, wo das betreffende Bauteil am Inneren des Klemmkanals anliegt (GB 885 372 A). Gleichzeitig ist erreicht, dass mittels der Anschlageinrichtung die Einschiebtiefe eines betreffenden Bauteils in den zugeordneten Klemmkanal auf ein gewünschtes Maß begrenzt und ein zu weites Einschieben des zugeordneten Bauteils in den Klemmkanal verhindert ist, so dass eine definierte Abstandshaltung der Bauteile sichergestellt wird.

Nachstehend ist die Erfindung anhand eines in der Zeichnung dargestellten Ausführungsbeispiels im einzelnen erläutert. Es zeigen:
- Fig. 1 eine perspektivische Schrägansicht einer Federklammer gemäß dem Stand der Technik in Form eines so genannten S-Clipses;
- Fig. 2 eine perspektivische Schrägansicht einer Federklammer gemäß dem hier zu beschreibenden Ausführungsbeispiel der Erfindung;
- Fig. 3 eine abgebrochene, perspektivische Teildarstellung zur Verdeutlichung der Verwendung der erfindungsgemäßen Federklammer zur Verbindung eines Anbauteiles in Form eines Wärme-Abschirmteiles an einem Trägerteil in Form eines Flansches eines Abgaskrümmers eines Verbrennungsmotors;
- Fig. 4 eine Seitenansicht des Ausführungsbeispieles der erfindungsgemäßen Federklammer und
- Fig. 5 und 6 eine Vorderansicht bzw. Draufsicht des Ausführungsbeispieles der erfindungsgemäßen Federklammer.

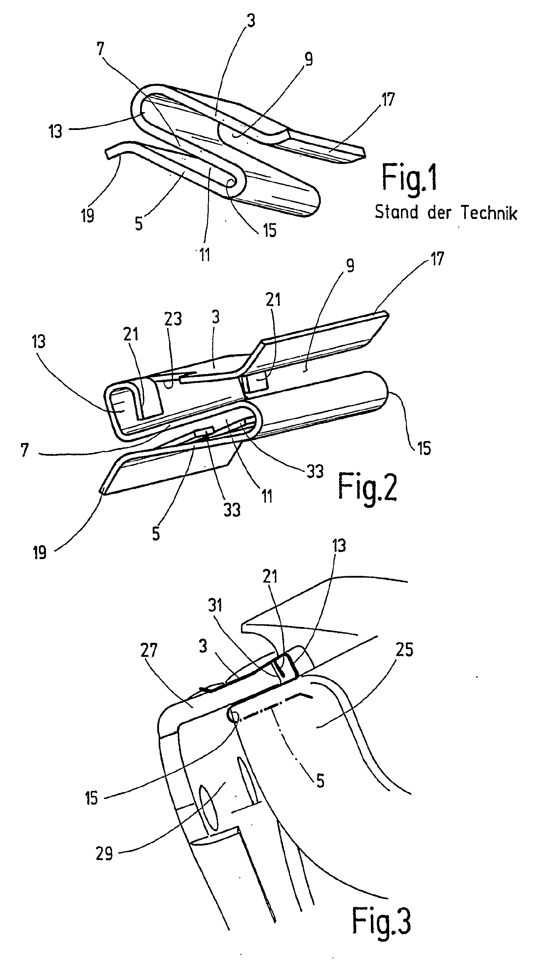

Fig. 1 zeigt eine handelsübliche Federklammer in Form eines so genannten S-Clipses, die als einstückiger Körper aus einem metallischen Werkstoff, vornehmlich Federstahl, geformt ist. Zur Bildung der S-Form sind zwei äußere Klemmschenkel 3 und 5 über einen inneren Klemmschenkel 7 so gefaltet, dass zu beiden Seiten des inneren Klemmschenkels 7 je ein Klemmkanal 9 und 11 gebildet wird. Bei der gezeigten, bekannten Federklammer hat der Klemmkanal 9 eine etwas größere lichte Weite als der Klemmkanal 11. Der Klemmkanal 9 ist daher zum Einschieben eines Bauteiles, etwa eines Trägerteiles, bestimmt, das eine etwas größere Materialdicke besitzt als das im Klemmkanal 11 zu klemmende Bauteil, also etwa ein am Trägerteil zu befestigendes Anbauteil. Die Klemmkanäle 9 und 11 sind an ihrem inneren Ende 13 bzw. 15 oder an ihrem Grund jeweils geschlossen. Am vorderen Öffnungsbereich der Klemmkanäle 9 und 11 weisen die äußeren Klemmschenkel 3 und 5 jeweils einen leicht nach außen gewölbten Endbereich 17 bzw. 19 auf, die den Eintrittsbereich.der Klemmkanäle 9 und 11 zur Erleichterung des Einschiebens des zu klemmenden Bauteiles erweitern. In dem Abschnitt zwischen dem jeweiligen Endbereich 17, 19 und dem inneren Ende 13 bzw. 15 der Klemmkanäle 9 bzw. 11 verlaufen die äußeren Klemmschenkel 3 und 5 in im wesentlichen ebenem Verlauf und näherungsweise parallel zu dem inneren Klemmschenkel 7, der zwischen den inneren Enden 13 und 15 der Klemmkanäle 9 bzw. 11 ebenfalls einen im wesentlichen ebenen Verlauf besitzt.

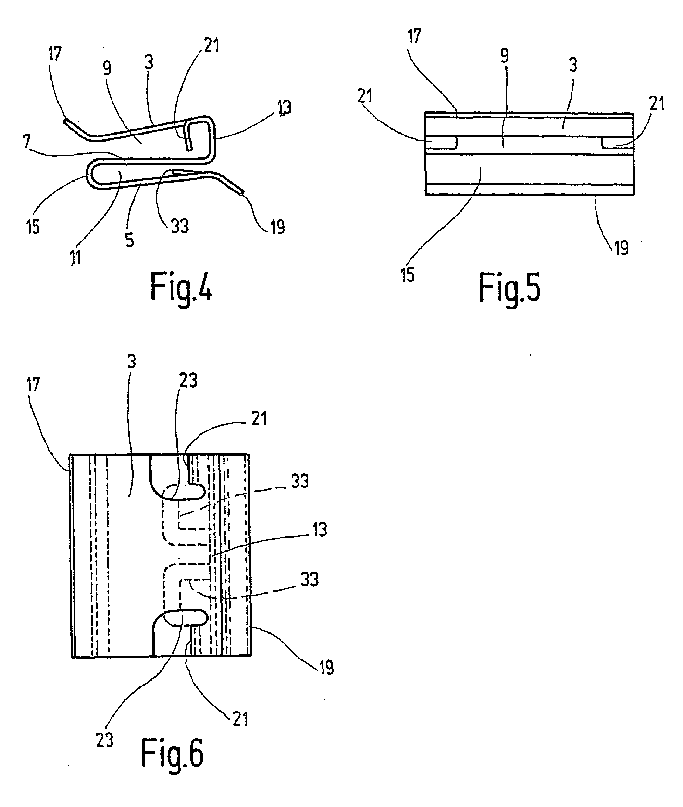

Die erfindungsgemäße Federklammer, von der in Fig. 2 bis 6 ein Ausführungsbeispiel gezeigt ist, unterscheidet sich von dem bekannten S-Clip grundsätzlich durch das Vorhandensein einer Anschlageinrichtung für die Begrenzung der Tiefe eines zugeordneten Klemmkanales. Bei dem hier gezeigten Ausführungsbeispiel ist die Anschlageinrichtung dem Klemmkanal 9 mit vergleichsweise größerer lichter Weite zugeordnet. Wie am deutlichsten aus Fig. 2 und 4 zu ersehen ist, ist die Anschlageinrichtung durch ins Innere des Klemmkanales 9 hinein abgebogene Teile 21 des äußeren Klemmschenkels 3 gebildet. Wie am deutlichsten den Fig. 2 und 4 zu entnehmen ist, sind die Teile 21 an Ausschnitten 23 des Klemmschenkels 3 frei geschnitten, wobei sich die Ausschnitte 23 in der Nähe des inneren Ende 13 oder des Grundes des Klemmkanales 9 an beiden Seitenrändern des Klemmschenkels 3 befinden. Somit bilden die abgebogenen Teile 21 beidseits der Ränder des Klemmkanales 9 jeweils einen Anschlag, der sich in der Nähe des inneren Endes 13 oder des Grundes des Klemmkanales 9 befindet.

Fig. 3 zeigt die Verwendung der erfindungsgemäßen Federklammer zur Befestigung eines als Hitzeschild dienenden Abschirmteiles 25 am Flansch 27 eines Abgaskrümmers 29. Wie ersichtlich, befindet sich der Endrand 31 des Flansches 27 des Abgaskrümmers 29 in einem Abstand vom inneren Ende 13 des Klemmkanales, wobei der Abstand durch den Abstand der die Anschläge bildenden Teile 21 vom inneren Ende 13 des Klemmkanales 9 definiert ist. Der Rand des Abschirmteiles 25 ist in den zugeordneten Klemmkanal jedoch in voller Tiefe eingeschoben, d. h. bis zum inneren Ende 15 des Klemmkanales 11.

Im letztgenannten Klemmkanal 11 sind Klemmnasen 33 aus der Fläche des äußeren Klemmschenkels 5 ausgeklingt, so dass gegen das innere Ende oder den Grund 15 des Klemmkanales 11 hin schräg vorspringende, federnde Krallen gebildet werden. Beim gezeigten Beispiel sind zwei im Abstand voneinander nebeneinander liegende Klemmnasen 33 im Klemmkanal 11 vorgesehen, der dem mit der Anschlageinrichtung (Teile 21) versehenen Klemmkanal 9 entgegengesetzt ist.

Wie am deutlichsten aus den Fig. 2 und 5 zu ersehen ist, haben die als Anschläge dienenden, aus der Ebene des Klemmschenkels 3 nach innen abgebogenen Teile 21 eine Breite, die jeweils lediglich einem Bruchteil der Breite des Klemmkanales 9 entspricht. Aufgrund dieser verhältnismäßig geringen Breite der Teile 21, verglichen mit der Gesamtbreite der Federklammer, ergibt sich eine gewisse Federelastizität der durch die Teile 21 gebildeten Anschlageinrichtung. Bei örtlich unterschiedlich auftretenden Temperaturänderungen der mit erfindungsgemäßen Federklammern verbundenen Bauteilen ist somit ein begrenzter Ausgleich der Einschiebtiefe des betreffenden Bauteiles in der entsprechenden Federklammer gegen die federnde Abstützkraft betreffender Teile 21 möglich, wobei die Federkraft eine Rückstellwirkung entfaltet, wenn der Zustand ungleicher Spannungen beendet ist.

Wie ebenfalls aus Fig. 2 und 4 deutlich ersichtlich ist, sind die Teile 21 aus den randseitigen Ausschnitten 23 des Klemmschenkels 3 in Form rechteckförmiger Nasen in etwa im rechten Winkel aus der Hauptebene des Klemmschenkels 3 abgebogen, wobei sich die Teile 21 mit ihrem freien Endrand bis in die Nähe des inneren Klemmschenkels 7 erstrecken. Die abgebogenen Teile 21 befinden sich vom inneren Ende oder dem Grund 13 des Klemmkanales 9 in einem Abstand, der weniger als 1/3 der Gesamttiefe des Klemmkanales 9 entspricht. Wie Fig. 2 und 4 ebenfalls zeigen, bilden die Teile 21 mit der im wesentlichen zu ihnen parallel verlaufenden fnnenfläche des inneren Endes 13 oder des Grundes des Klemmkanales 9 eine Profilform, die näherungsweise einem nicht vollständig geschlossenen, rechteckförmigen Kastenprofil entspricht.

## Patentansprüche

1. Federklammer, insbesondere aus Federstahl, mit drei einstückig miteinander verbundenen Klemmschenkeln (3, 5, 7), von denen zur Bildung eines S-förmigen Profiles zwei äußere Schenkel (3, 5) über einen inneren Schenkel (7) gefaltet sind, so dass zwei an diesen angrenzende, zu entgegengesetzten Seiten offene Klemmkanäle (9, 11) gebildet werden, wobei zumindest der eine (5) der beiden äußeren Klemmschenkel (3,5) zumindest eine aus der Fläche des Klemmschenkels ausgeklinkte Klemmnase (33) aufweist, die im Klemmkanal (11) eine gegen den Grund (15) desselben schräg vorspringende federnde Kralle zur Verkrallung mit einem im Klemmkanal (11) aufzunehmenden Bauteil bildet, **dadurch gekennzeichnet, dass** einer der Klemmkanäle (9) eine Anschlageinrichtung aufweist, die die Tiefe des Klemmkanales (9) derart begrenzt, dass das in diesem Klemmkanal (9) zu sichernde Bauteil (27, 29) im Abstand vom inneren Ende (13) des Klemmkanales (9) gehalten ist, dass der andere (3) der beiden äußeren Klemmschenkel (3,5) unter Bildung der Anschlageinrichtung an beiden Seitenrändern je einen ins Innere des Klemmkanals (9) hinein abgebogenen Teil (21) aufweist, so dass zu beiden Seiten des Klemmkanals (9) je ein Anschlag gebildet ist, und dass die jeweilige Klemmnase (33) in demjenigen Klemmkanal (11) vorgesehen ist, der zu dem die Anschlageinrichtung aufweisenden Klemmkanal (9) entgegengesetzt ist.

2. Federklammer nach Anspruch 1, **dadurch gekennzeichnet, dass** der jeweilige Anschlag, der aus der Ebene des anderen äußeren Klemmschenkels (3) in den Klemmkanal (9) hinein abgebogen ist, in der Nähe des inneren Endes (13) des Klemmkanals (9) sich befindet.

3. Federklammer nach Anspruch 1 oder 2, **dadurch gekennzeichnet, dass** zwei nebeneinanderliegende Klemmnasen (33) an dem einen äußeren Klemmschenkel (5), der den Klemmkanal (11) begrenzt, ausgeklinkt sind.

## Claims

1. A spring clip, in particular made of spring steel, having three clamping arms (3, 5, 7) connected to one another to form one piece, of which in order to form an S-shaped profile two outer arms (3, 5) are folded over an inner arm (7) so that two open clamping channels (9, 11) adjacent to the latter and on opposing sides, are formed, at least one (5) of the two outer clamping arms (3, 5) having at least one clamping projection (33) notched out of the surface of the clamping arm which forms in the clamping channel (11) a springy claw projecting towards the base (15) of the latter at an angle in order to claw into a component to be accommodated in the clamping channel (11), **characterised in that** one of the clamping channels (9) has a stop device which limits the depth of the clamping channel (9) such that the component (27, 29) to be secured in this clamping channel (9) is kept a distance away from the inner end (13) of the clamping channel (9), that the other (3) of the two outer clamping arms (3, 5) has a respective part (21) bent into the inside of the clamping channel (9) so as to form the stop device on both side edges so that a stop is respectively formed on both sides of the clamping channel (9), and that the respective clamping projection (33) is provided in the clamping channel (11) which is opposite the clamping channel (9) having the stop device.

2. The spring clip according to Claim 1, **characterised in that** the respective stop, which is bent into the clamping channel (9) out of the plane of the other outer clamping arm (3), is located close to the inner end (13) of the clamping channel (9).

3. The spring clip according to Claim 1 or 2, **characterised in that** two clamping projections (33) lying next to one another are notched out on the one outer clamping arm (5) which limits the clamping channel (11).

## Revendications

1. Agrafe élastique, notamment en acier pour ressort, ayant trois branches (3, 5, 7) de serrage reliées entre elles d'une seule pièce, dont, pour la formation d'un profil en forme de S, deux branches (3, 5) extérieures sont pliées sur une branche (7) intérieure de manière à former deux canaux (9, 11) de serrage voisins de celle-ci et ouverts vers des côtés opposés, dans laquelle au moins l'une (5) des deux branches (3, 5) de serrage extérieures a au moins un bec (33) de serrage réalisé par encochage de la surface de la branche de serrage et formant dans le canal (11) de serrage, avec un élément reçu dans le canal (11) de serrage pour le cramponnage, un crampon élastique faisant saillie de manière inclinée par rapport au fond (15) du canal, **caractérisée en ce que** l'un des canaux (9) de serrage a un dispositif de butée, qui limite la profondeur du canal (9) de serrage de manière à ce que l'élément (27, 29) à fixer dans ce canal (9) de serrage soit maintenu à distance de l'extrémité (13) intérieure du canal (9) de serrage, **en ce que** l'autre (3) des deux branches (3, 5) de serrage extérieures a, avec formation du dispositif de butée, sur les deux bords latéraux respectivement une partie (21) courbée vers l'intérieur du canal (9) de serrage, de manière à former une butée des deux côtés du canal (9) de serrage, et **en ce que** le bec (33) de serrage respectif est prévu dans le canal (11) de serrage, qui est opposé au canal (9) de serrage ayant le dispositif de butée.

2. Agrafe élastique suivant la revendication 1, **caractérisée en ce que** la butée respective, qui est courbée hors du plan de l'autre branche (3) de serrage extérieure pour venir dans le canal (9) de serrage, se trouve à proximité de l'extrémité (13) intérieure du canal (9) de serrage.

3. Agrafe élastique suivant la revendication 1 ou 2, **caractérisée en ce que** deux becs (33) de serrage côté à côte sont réalisés par encochage sur la branche (5) de serrage extérieure, qui délimite le canal (11) de serrage.
